# EUROPEAN PATENT APPLICATION

(11) **EP 3 639 974 A1**
(43) Date of publication of application: **22.04.2020**
(21) Application number: 18200561.1
(22) Date of filing: 15.10.2018
(51) Int. Cl.: B24B 31/02, B24B 31/10, B24B 31/112, B29C 64/135, B24B 31/06

(54) **METHOD AND DEVICE FOR POLISHING A SOLID ARTICLE OBTAINED BY AN ADDITIVE MANUFACTURING DEVICE**

(71) Applicant: Sintratec AG, 5200 Brugg (CH)
(72) Inventor: von Burg, Christian, 9052 Niederteufen (CH)
(74) Representative: Herrmann, Johanna

(57) **Abstract**

The invention relates to a method for polishing a solid article (10) obtained by an additive manufacturing device, wherein the solid article (10) is placed in a container (105) containing a plurality of magnetizable bodies (103). A magnet (109) is provided for magnetizing the magnetizable bodies (103). The magnetizable bodies (103) are moved in the container (105) if one of the magnet or the container (105) are moved. The invention further relates to a polishing device (100) for polishing a solid article (10) obtained by an additive manufacturing device comprising a container (105) containing a plurality of magnetizable bodies (103) for receiving the solid article (10), a magnet (109) for magnetizing the magnetizable bodies (103). The magnetizable bodies (103) are movable within the container (105) if one of the magnet (109) or the container (105) are moved. The polishing device (100) is used for polishing a solid article (10) obtained by an additive manufacturing device.

## Description

### TECHNICAL FIELD

The invention relates a method for polishing a solid article obtained by an additive manufacturing device and a polishing device for polishing a solid article obtained by an additive manufacturing device.

### DESCRIPTION OF RELATED ART

A solid article obtained by an additive manufacturing device is constituted of a plurality of layers. Each of these layers making up the solid article is produced sequentially, thus each new layer is added on top of previously manufactured layers. The manufacturing of a solid article by an additive manufacturing device can for instance include a laser sintering device according to WO2007009526 A1. The additive manufacturing device of WO2007009526 A1 includes a container for a powder to be solidified by a laser beam directed onto its surface. The laser beam provides the energy source for solidifying a surface layer of the powder in the working plane in specific regions corresponding to a layer of the finished solid article. After completion of the solidification process in the working plane, an application device applies another layer of powder on top of the surface layer just completed. The container is movable to place the other layer at the level of the working plane. This layer is again exposed to the laser beam and the solidification process is repeated. The laser beam is generated by a laser, which is deflected by a deflecting device that is controlled by a control device and is focused at a predetermined point within the working plane by a focusing device. An article can comprise hundreds or thousands of such layers. The transition from one layer to the next layer is not entirely smooth, therefore the surface of the solid article obtained by such an additive manufacturing device is composed of a plurality of edges. The surface of the article is thus composed of a plurality of steps when viewed in section, wherein the number of steps corresponds to the number of layers used for producing the article by the additive manufacturing device.

The edges on the surface of the solid article may for some applications be undesirable, therefore, for these applications, the article has to be polished to remove these edges. Currently, such solid articles are treated by means of sandblasting followed by by vibration polishing or by tumbling or a combination of these polishing steps. Sandblasting is used to remove any powder adhering to the surface of the article. Subsequently, the surface of the article can be polished by vibration polishing or by tumbling.

Therefore, currently at least two different aftertreatment methods are used for obtaining an article with a smooth surface, in particular a shiny surface.

It is thus an object of the invention to propose a method for polishing an article obtained by an additive manufacturing device by which the polishing step can be completed in single process step with a single polishing device.

### SUMMARY OF THE INVENTION

A method for polishing an article obtained by an additive manufacturing device according to the invention is subject of claims 1 to 6 and a polishing device for polishing an article obtained by an additive manufacturing device is subject to claims 7 to 15.

The invention relates thus to a method for polishing a solid article obtained by an additive manufacturing device, wherein the solid article is placed in a container containing a plurality of magnetizable bodies, wherein a magnet is provided for magnetizing the magnetizable bodies such that the magnetizable bodies are moved within the container if one of the magnet or the container is moved. A polishing device used for the method comprises a container, a plurality of magnetizable bodies, a magnet for magnetizing the magnetizable bodies. The magnetizable bodies are movable within the container if one of the magnet or the container is moved.

According to an embodiment, the container is rotated. According to an embodiment, the container is oscillated. According to an embodiment, the container is pivoted. According to an embodiment, the container can perform a combination of a rotation and an oscillating movement or a combination of an oscillating and pivoting movement or a combination of a rotation and a pivoting movement. According to an embodiment, the container can perform a combination of a rotation and an oscillating movement and a pivoting movement. According to any of the preceding embodiments, the magnet can remain in a fixed position. By the rotation or oscillation or pivoting movement of the container, a centrifugal or linear force is exerted on the magnetizable bodies, in particular if they are immerged in a fluid. If the magnet is kept in a fixed position, the magnetizable bodies may be attracted or pushed off, whereby the magnetizable bodies are subjected to a linear motion or a linear motion in a direction different from the oscillation. This linear motion can be superimposed on the rotary or oscillatory movement. If a magnetizable body impinges the surface of the solid article, the impingement can occur in any angle. In addition thereto, the solid article may change its position as a result of the centrifugal force or linear force resulting from the oscillation, rotation or pivoting movement acting also on the solid article itself. The impact of any magnetizable body with the surface of the solid article results in a deformation of the surface of the solid article, in particular in a deformation of any protrusion on the surface of the solid article, such as an edge of the solid article.

According to an embodiment the magnet performs a rotary movement. According to an embodiment, the magnet performs an oscillatory movement. According to an embodiment the magnet performs a pivoting movement. According to any of the preceding embodiments, the container can remain stationary. The magnetizable bodies are moved by the magnetic force generated by the magnets and acting on the magnetizable bodies. The moving magnetizable bodies can contact the solid article immerged in the magnetizable bodies. The impact of any of the magnetizable bodies on the surface of the solid article may result in a deformation of the surface of the solid article, in particular in a deformation of any protrusion on the surface of the solid article, such as an edge of the solid article.

According to an embodiment the magnetizable bodies have a volume of at least 0.001 mm³ and at most 2 cm³. According to an embodiment the magnetizable bodies have a length dimension, which ranges from at least 0.2 mm up to and including 2 cm. The length dimension may in particular be the largest distance between two points on the surface of the magnetizable body. In case the magnetizable body is configured as a spherical body, the length dimension corresponds to the diameter of the spherical body. In case the magnetizable body is configured as a cylindrical body, which is characterized by the cylinder height and the diameter, the length dimension corresponds to the cylinder height if the cylinder height is greater than the diameter. The length dimension corresponds to the diameter if the diameter is greater than the cylinder height. In case the spherical body is configured as a cuboid, the length dimension corresponds to the longest diagonal of the cuboid.

According to an embodiment the solid article is immerged in the magnetizable bodies for a duration of at least 1 minute up to and including 500 minutes. According to an embodiment the solid article is immerged in the magnetizable bodies for a duration of at least 10 minutes up to and including 500 minutes. According to an embodiment the solid article is immerged in the magnetizable bodies for a duration of at least 10 minutes up to and including 60 minutes.

According to an embodiment the mean surface roughness according to ISO 4287 is at most 0.1 mm after the extraction of the solid article from the magnetizable bodies.

A polishing device for polishing a solid article obtained by an additive manufacturing device comprises a container containing a plurality of magnetizable bodies for receiving the solid article, a magnet for magnetizing the magnetizable bodies wherein the magnetizable bodies are movable within the container if one of the magnet or the container is moved.

According to an embodiment the container is rotatable or oscillatable, thus subjectable to an oscillatory motion or pivotable, thus subjectable to a pivoting movement. According to an embodiment the magnet is rotatable or oscillatable, thus subjectable to an oscillatory motion or pivotable, thus subjectable to a pivoting movement.

According to an embodiment the magnet is placed outside of the container. If the magnet is placed outside to container, the magnet may not come into direct contact with the magnetizable bodies. The magnet is according to this embodiment not subject to wear resulting from any contact with the magnetizable bodies.

According to an embodiment the magnetizable bodies comprise at least one element selected from the group of spherical bodies, cuboid bodies or cylindrical bodies.

According to an embodiment the magnetizable bodies have a volume of at least 0.001 mm³ and at most 2 cm³. According to an embodiment, the magnetizable bodies have a length dimension, which ranges from at least 0.2 mm up to and including 2 cm.

According to an embodiment the solid article is immerged in the magnetizable bodies for a duration of at least 1 minute up to and including 500 minutes. The solid article is according to this embodiment placed in the container containing the magnetizable bodies for a duration of at least 1 minute up to and including 500 minutes. According to an embodiment the solid article is immerged in the magnetizable bodies for a duration of at least 10 minutes up to and including 500 minutes. According to an embodiment the solid article is immerged in the magnetizable bodies for a duration of at least 10 minutes up to and including 60 minutes.

According to an embodiment the magnetizable bodies are at least partially immerged in a fluid. A fluid may be provided for binding any powder particles present on the solid article from the added manufacturing method or any dust generated by the polishing method. If the magnetizable bodies are at least partially immerged in the fluid, any dust or powder particles may be retained in the fluid. Thereby, any emission of dust or powder particles into the environment can be prevented. After completion of the polishing step, the fluid can be discharged from the container. The fluid can be subjected to an aftertreatment step, such as a sedimentation method, a centrifugal separation method or a filtering method to separate the powder particles and any dust from the fluid before recycling the fluid to the polishing device.

According to an embodiment the magnetizable bodies contain iron. According to an embodiment the magnetizable bodies contain stainless steel. According to an embodiment, the magnetizable bodies can contain an iron core and a coating layer. According to an embodiment, the coating layer can comprise an abrasive. According to an embodiment, the coating layer can comprise a ceramic material. By means of a coating layer, the polishing can be improved. According to an embodiment, the magnetizable bodies can contain an iron core and a bonding layer. According to an embodiment, the bonding layer can comprise an abrasive. According to an embodiment, the bonding layer can comprise a ceramic material. By means of a bonding layer, the polishing can be improved.

A magnetizable body comprising a coating or boding layer can result in an improved surface quality of the solid article. A burnishing or grinding operation can be performed by a magnetizable body comprising a coating or bonding layer.

The polishing device according to one of the preceding embodiments is used for polishing a solid article obtained by an additive manufacturing device.

The additive manufacturing device for manufacturing a solid article comprises a beam generation unit, a raw material supply unit, a raw material container containing a raw material and having a raw material surface forming a first layer which can be exposed to a beam emitted by the beam generation unit. A beam is generated by the beam generation unit and a directing unit directs the beam emitted by the beam generation unit onto the raw material surface, such that a first solid layer portion of the solid article is obtained when directing the beam onto the raw material surface, and in at least a second layer of the raw material is supplied from the raw material supply unit and deposited on top of the first layer, wherein further layers of raw material are deposited on top of all previously deposited layers until the solid article is obtained.

According to an embodiment, the raw material comprises a powder. The powder can contain a polymer, in particular a polyamide with a surface melting temperature greater than 170 degrees Celsius at ambient pressure conditions, which undergoes a sintering process upon exposure to the laser beam. The powder can contain one compound of the group of a polycarbonate (PC), a polymethylmethacrylate (PMMA), a polystyrene (PS), a high density polyethylene (PE-HD), a polyamide (PA) or a polyaryletherketone (PEEK). In particular, the powder can contain one of the compounds of the group of a PA11 or PA12 or PEEK. The powder can contain pigments or other additives in particular for enhancing light absorption. The powder can in particular contain carbon black. Furthermore, the powder can contain a metal, e.g. aluminum. The powder can contain a ceramics material. The powder can contain at least one of a biological material, a material generated from renewable resources, or an edible material.

By directing the beam onto the pre-heated raw material surface the raw material can be sintered or melted at least in a region covered by the spot of the pre-heated raw material surface exposed to the beam.

According to another embodiment, the raw material can be liquid or a slurry. By directing the beam onto the pre-heated raw material surface the raw material can be solidified at least in a region covered by the spot of the pre-heated raw material surface exposed to the beam. In particular, a chemical reaction can be initiated by exposing the pre-heated raw material to the beam. According to an embodiment, the beam is exposed for a period of less than a second at a spot and subsequently directed to an adjacent spot for sintering or solidifying the pre-heated raw material surface at the adjacent spot.

According to any of the embodiments the manufacture of a layer of the solid article is completed prior to the manufacture of a subsequent layer. In the following it is referred exemplarily to a first layer for a layer manufactured prior to a second layer which forms the subsequent layer. It implies that a third layer can be manufactured subsequently to the second layer, a fourth layer can be manufactured subsequently to a third layer. The total amount of layers to obtain the entire solid article can thus be 50 or more layers, in particular 100 or more layers. The following description is therefore representative for the manufacture of all layers constituting the solid article. Due to the fact, that the manufacture of the first layer is thus completed before the manufacture of the second layer, the temperature of the first solid article portion obtained from the first layer can decrease and a solidification of the first solid article portion obtained from the first layer can take place. This has the consequence, that the shape of the first solid article portion is determined before the second solid article portion is manufactured. In many cases, the second solid article portion will not be placed exactly on top of the first article portion, that is substantially in all cases, in which the outer surface of the solid article is not vertical when it is in the build position in the raw material container. Whenever the second solid article portion is thus not exactly placed on top of the first solid article portion, a stepped outer surface will result. The stepped outer surface thus forms a rugged surface. The rugged outer surface can be polished by a method as outlined above when placed in a polishing device as outlined above.

Advantageously, the size of the magnetizable body is greater than the height of a layer. If a layer has a layer height of 0.1 mm, the length or the diameter of the magnetizable body is more than 0.1 mm. In particular, the size of the magnetizable body can be at least twice the height of the layer. Thus, in this example, the length or the diameter of the magnetizable body is at least 0.2 mm.

For ease of manipulation, the size of the magnetizable body can be at least twice the particle size of a raw material powder. Thereby, any powder present on the solid article after its extraction from the raw material container forming the build unit can be separated from the magnetizable body easily after completion of the polishing method. The powder can be separated from the magnetizable bodies by a sieving method. The magnetizable bodies can thus be cleaned after completion of the polishing method by a sieving method prior to be used for polishing another solid article.

The invention further relates to a system comprising a solid article and a polishing device according to any of the embodiments. The solid article can be obtained by an additive manufacturing method.

### BRIEF DESCRIPTION OF THE DRAWING

The invention will be explained in more detail in the following with reference to the drawings. There are shown in a schematic representation in:
Fig. 1 a perspective view of an additive manufacturing device including a beam directing unit,
Fig. 2 a schematic section of a polishing device according to a first embodiment of the invention,
Fig. 3 a schematic section of a polishing device according to a second embodiment of the invention,
Fig. 4 a schematic section of a polishing device according to a third embodiment of the invention,
Fig. 5 a schematic section of a polishing device according to a fourth embodiment of the invention,
Fig. 6 a schematic section of a polishing device according to a fifth embodiment of the invention,
Fig. 7 a schematic section of a polishing device according to a sixth embodiment of the invention,
Fig. 8 a detail of a first variant of magnetizable bodies,
Fig. 9 a detail of a second variant of magnetizable bodies,
Fig. 10 a detail of a third variant of magnetizable bodies.

### DETAILED DESCRIPTION

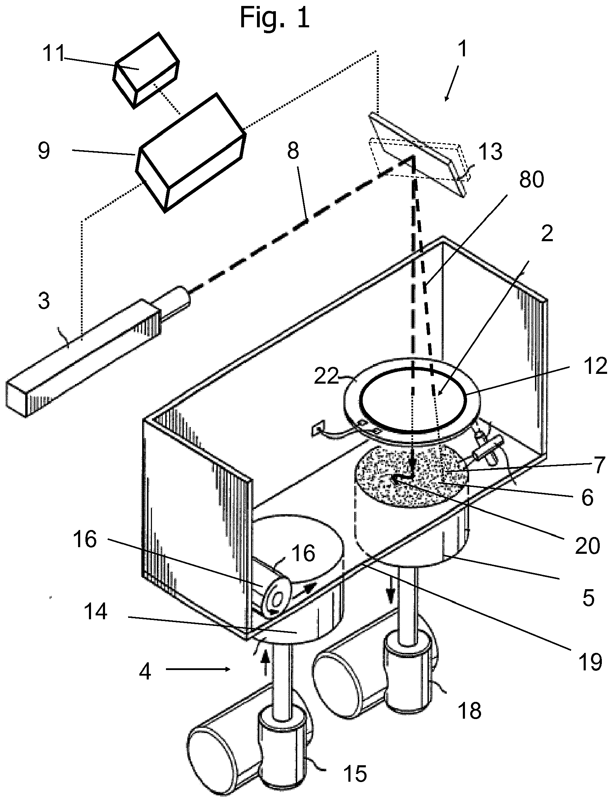

Fig. 1 shows a perspective view of a portion of an additive manufacturing device 1 including a heating device 2 for the additive manufacturing device for manufacturing a solid article 10 in an additive manufacturing sequence. The additive manufacturing device comprises a beam generation unit 3, in particular a diode laser generation unit, a raw material supply unit 4 and a raw material container 5 containing a raw material 6. The raw material 6 has a raw material surface 7 exposed to a beam 8 to be emitted by the beam generation unit 3 when it is operated. The operation of the beam is controlled by a control unit 9. The optional heating device 2 includes a heating surface 12 to provide thermal energy to the raw material surface 7 to form a pre-heated raw material surface 17. The beam generation unit 3 is disposed with a directing unit 13 to direct the beam 8 onto the pre-heated raw material surface 17 according to a computer generated model of the solid article 10 stored in a storage unit 11 associated with the control unit 9. Thereby the operation of the directing unit 13 is controlled by the control unit 9. The directing unit 13 comprises a rotatable mirror, such as a galvanometer. The beam 8 generated by the beam generation unit 3 traverses the heating surface 2 onto the pre-heated raw material surface 17. The heating surface 12 of the heating device 2 can be disposed with an opening for the passage of the beam or can be transparent for the beam The heating surface 12 can be transparent for a beam, in particular a laser beam of a diode laser. Advantageously the heating surface is transparent for light of a wavelength in a range of 100 nm up to and including 1 mm.

By rotation of the mirror of the directing unit 13, any point on the surface of the raw material surface 7 can be reached. However, as shown in an alternative position of the mirror shown in dotted lines, the angle of impact of the beam on the raw material surface changes. Ideally, in the center of the raw material surface 7, the angle of impact between the beam 8 and the raw material surface is about 90 degrees.

The generation of a solid article 10 by an additive manufacturing method performed by the additive manufacturing device involves the following steps. A raw material is supplied as a layer of a thickness of less than 1 mm by the raw material supply unit 4. According to a preferred embodiment, the thickness or height of the layer was about 100 µm. The raw material supply unit 4 can include a raw material supply container 14, which is filled with raw material. The raw material supply container 14 is movable in a direction normally to the plane containing the layer of raw material for manufacture of the solid article by the additive printing method. The raw material supply unit 4 includes a drive unit 15 for moving the bottom of the raw material supply container 14 in a stepwise manner. For the generation of each new layer, the bottom of the raw material supply container 14 is moved a step upwards such that a volume corresponding to the thickness of a new layer is supplied to the raw material chamber 20 connecting the raw material supply container 14 and the raw material container 5. The raw material chamber 20 is shown in Fig. 1 in a partially opened state, thus the front wall and the covering wall thereof have been omitted in the drawing to show the elements of the raw material handling units comprising the raw material supply unit 4 and the raw material container 5. Once the bottom of the raw material supply container 14 is moved a step upward, the raw material for a second layer is provided. The raw material is distributed on the surface of the first layer for which the additive manufacturing process has already been completed. A raw material distribution unit 16 is provided for distributing the raw material in the raw material chamber 19. The raw material distribution unit 16 can be in particular configured as a roller. The raw material distribution unit 16 can perform a sliding or rolling movement along the chamber bottom of the raw material chamber 19. The raw material distribution unit 16 thereby pushes the volume of raw material supplied for generation of the second layer to the raw material container 5. The raw material container 5 is also movable in a direction normal to the chamber bottom of the raw material chamber 19. In particular, a drive unit 18 can be foreseen for allowing the raw material container to move away from the bottom of the raw material chamber 19, which is in this drawing corresponding to a downward movement.

The heating device 2 includes a heating surface 12 for heating the surface 7 of the raw material 6 in the raw material container 5. The heating surface 12 is not visible in Fig. 1 as it extends towards the surface 7 of the raw material 6. The raw material 5 is pre-heated by the thermal energy generated by the heating surface 12 to from a pre-heated raw material surface 17. The heating device according to this embodiment is of a circular cross-section corresponding to the cross-section of the cylindrical raw material container. The heating device contains in this embodiment an annular heating surface 22 and the heating surface 12. The heating surface 12 is transparent to the beam, thereby the beam passes through the heating surface 12. The annular heating surface 22 can contain a radiation heater or a resistance heater. The beam 8 generated and emitted by the beam generation unit 3 is directed by a directing unit 13 onto the pre-heated raw material surface.

The beam can proceed at a speed of at least 50 mm/s. That means, the beam can travel at a speed of at least 50 mm/s over the preheated raw material surface and sinters the raw material surface at the spots of contact.

The beam 8 is directed over the pre-heated raw material surface 17 according to a computer generated model of the solid article 10 stored in a storage unit 11 associated with the control unit 9. The beam 8 travels through the heating surface 12 onto the pre-heated raw material surface 17 such that a first solid layer 20 of the solid article 10 is obtained when directing the beam 8 onto the pre-heated raw material surface 17. In at least one subsequent step, a second layer of the raw material is supplied from the raw material supply unit and deposited on top of the first layer. This subsequent step can be repeated until the solid article is obtained by adding the solid layers 20 one upon each other. The raw material container 5 is successively moved downwardly by the drive unit 18. After completion of the last solid layer, the printing process of the solid article is completed. The solid article is embedded in the raw material 6. The raw material container 5 is extracted from the printing device 1. The unused raw material is removed therefrom and may be refilled into the raw material supply container 14 for manufacturing another solid article. The solid article 10 is thus separated from the raw material 6, which may be re-used completely or partly. At this stage the raw material container is emptied, and the solid article is extracted from the raw material container.

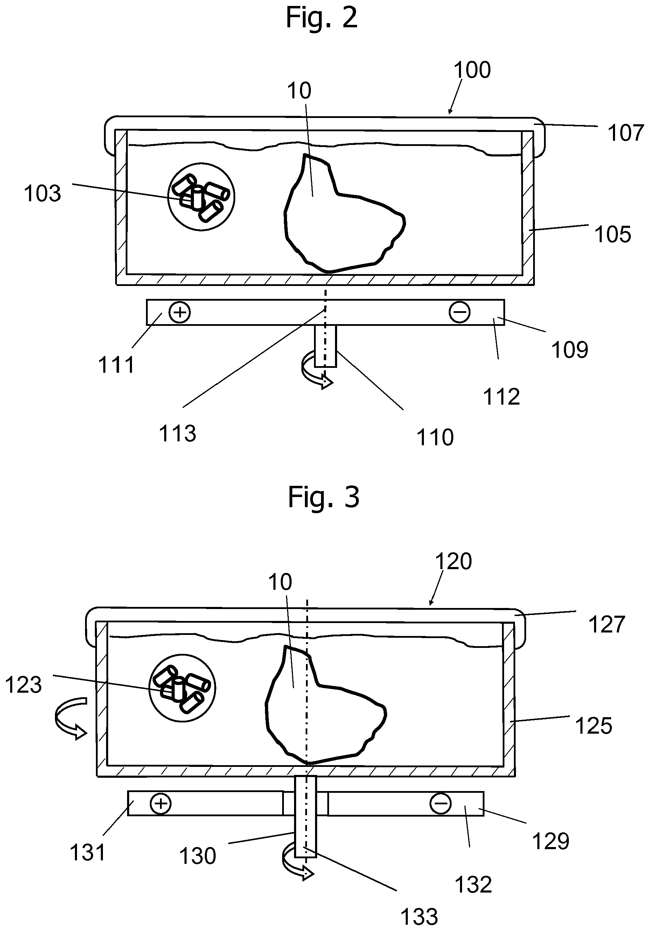

Fig. 2 shows a polishing device 100 according to a first embodiment of the invention.

The polishing device 100 for polishing a solid article 10 obtained by an additive manufacturing device according to the first embodiment comprises container 105 containing a plurality of magnetizable bodies 103 for receiving the solid article 10 and a magnet 109 for magnetizing the magnetizable bodies 103. The magnetizable bodies 103 are movable within the container 105 if the magnet 109 is moved. The container 105 can be closed by a cover or lid 107. According to this embodiment, the magnet 109 is rotatable. The magnet 109 can be configured as a bar comprising a first end 111 with a positive polarity and a second end 112 with a negative polarity. The magnet 109 is attached to a drive shaft 110 which is connected to a drive unit not shown in the drawing. The longitudinal axis 113 of the drive shaft 110 constitutes the axis of rotation of the magnet 109 according to the first embodiment.. A plurality of magnets 109 may be provided. The magnets may be arranged on a plate. According to an alternative embodiment, the magnets may be arranged on a disk. According to a further embodiment, the magnet may be u-shaped or arranged on a cylinder.

Fig. 3 shows a schematic section of a polishing device 120 according to a second embodiment of the invention. The polishing device 120 for polishing a solid article 10 obtained by an additive manufacturing device according to the second embodiment comprises container 125 containing a plurality of magnetizable bodies 123 for receiving the solid article 10 and a magnet 129 for magnetizing the magnetizable bodies 123. The magnetizable bodies 123 are movable within the container 125 if the container 125 is moved. The container 125 can be closed by a cover or lid 127. A drive shaft 130 is attached to the container 125. The drive shaft 130 can be connected to a drive unit not shown in the drawing. The longitudinal axis 133 of the drive shaft 130 constitutes the axis of rotation of the container 125 according to the second embodiment. The magnet 129 can be configured as a bar comprising a first end 131 with a positive polarity and a second end 132 with a negative polarity. The magnet 129 can be stationary. According to an alternative embodiment not shown in the drawings, the magnet 129 may comprise a plurality of bars in a star-shaped configuration. According to a further embodiment, the magnet may be of an annular configuration.

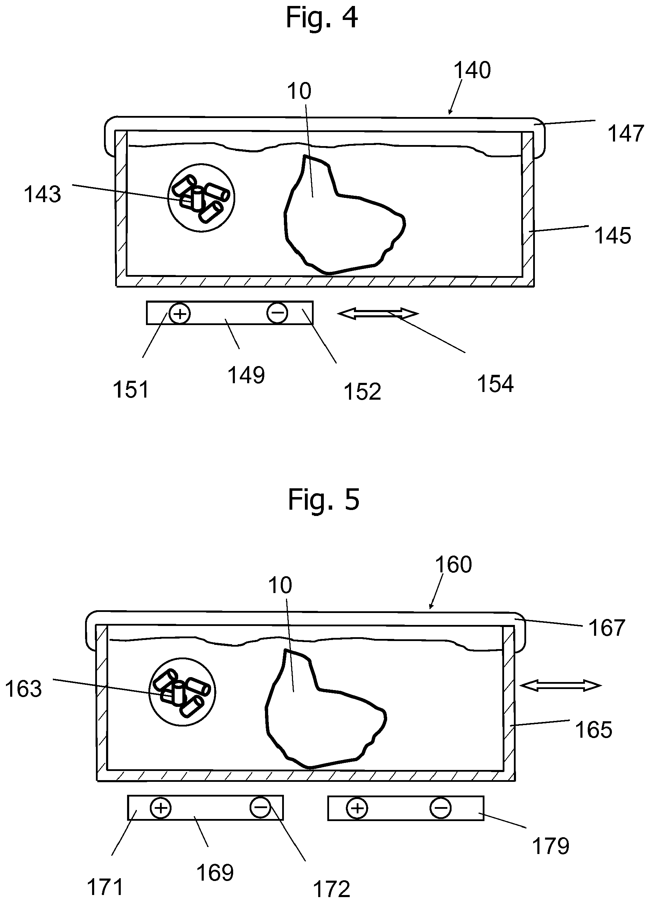

Fig. 4 shows a schematic section of a polishing device 140 according to a third embodiment of the invention. The polishing device 140 for polishing a solid article 10 obtained by an additive manufacturing device according to the third embodiment comprises container 145 containing a plurality of magnetizable bodies 143 for receiving the solid article 10 and a magnet 149 for magnetizing the magnetizable bodies 143. The magnetizable bodies 143 are movable within the container 145 if the magnet 149 is moved. The container 145 can be closed by a cover or lid 147. According to this embodiment, the magnet 149 performs an oscillatory movement. The magnet 149 can be configured as a bar comprising a first end 151 with a positive polarity and a second end 152 with a negative polarity. The magnet 149 is attached to a drive unit not shown in the drawing. An arrow 154 shows a possible direction of oscillation. A plurality of magnets 149 may be provided. The magnets may be arranged on a plate. According to an alternative embodiment, the magnets may be arranged on a disk. According to a further embodiment, the magnet may be u-shaped or arranged on a cylinder.

Fig. 5 shows a schematic section of a polishing device 160 according to a fourth embodiment of the invention. The polishing device 160 for polishing a solid article 10 obtained by an additive manufacturing device according to the fourth embodiment comprises a container 165 containing a plurality of magnetizable bodies 163 for receiving the solid article 10 and a first magnet 169 and a second magnet 179 for magnetizing the magnetizable bodies 163. The magnetizable bodies 163 are movable within the container 165 if the container 165 is moved. The container 165 can be closed by a cover or lid 167. A drive unit can be attached to the container 165. The drive unit is not shown in the drawing. The container 165 can perform an oscillatory movement for instance in the direction of the arrow 174. The first magnet 169 can be configured as a bar comprising a first end 171 with a positive polarity and a second end 172 with a negative polarity. The second magnet 179 can be of the same configuration. At least one of the first and second magnets 169, 179 can be stationary. According to an embodiment not shown in the drawings the polarities of the second magnet 179 could be opposed to the polarities of the first magnet 169. According to an alternative embodiment not shown in the drawings, further magnets in addition to the first and second magnets 169, 179 may be provided. In particular, a plurality of magnets which are configured as bars can be arranged in a star-shaped configuration. According to a further embodiment, the magnet may be of an annular configuration.

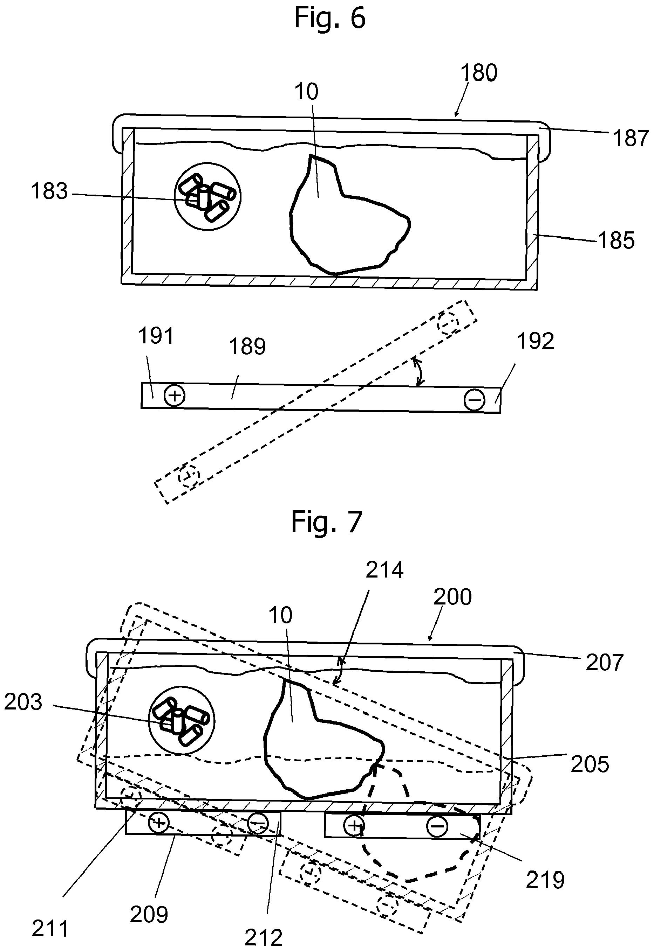

Fig. 6 shows a schematic section of a polishing device according to a fifth embodiment of the invention. The polishing device 180 for polishing a solid article 10 obtained by an additive manufacturing device according to the fifth embodiment comprises container 185 containing a plurality of magnetizable bodies 183 for receiving the solid article 10 and a magnet 189 for magnetizing the magnetizable bodies 183. The magnetizable bodies 183 are movable within the container 185 if the magnet 189 is pivoted. The container 185 can be closed by a cover or lid 187. According to this embodiment, the magnet 189 performs a pivoting movement. The magnet 189 can be configured as a bar comprising a first end 191 with a positive polarity and a second end 192 with a negative polarity. The magnet 189 is attached to a drive unit not shown in the drawing. An arrow 194 shows a possible direction of the pivoting movement. A plurality of magnets 189 may be provided. The magnets may be arranged on a plate. According to an alternative embodiment, the magnets may be arranged on a disk. According to a further embodiment, the magnet may be u-shaped or arranged on a cylinder.

Fig. 7 shows a schematic section of a polishing device 200 according to a sixth embodiment of the invention. The polishing device 200 for polishing a solid article 10 obtained by an additive manufacturing device according to the sixth embodiment comprises a container 205 containing a plurality of magnetizable bodies 203 for receiving the solid article 10 and a first magnet 209 and a second magnet 219 for magnetizing the magnetizable bodies 203. The magnetizable bodies 203 are movable within the container 205 if the container 205 is moved. The container 205 can be closed by a cover or lid 207. A drive unit can be attached to the container 205. The drive unit is not shown in the drawing. The container 205 can perform a pivoting movement for instance in the direction of the arrow 214. The first magnet 209 can be configured as a bar comprising a first end 211 with a positive polarity and a second end 212 with a negative polarity. The second magnet 219 can be of the same configuration. At least one of the first and second magnets 209, 219 can be stationary. According to an embodiment not shown in the drawings the polarities of the second magnet 219 could be opposed to the polarities of the first magnet 209. According to an alternative embodiment not shown in the drawings, further magnets in addition to the first and second magnets 209, 219 may be provided. In particular, a plurality of magnets which are configured as bars can be arranged in a star-shaped configuration. According to a further embodiment, the magnet may be of an annular configuration.

The container or the magnets according to any of the embodiments may perform any combination of a rotating, oscillating or pivoting movement.

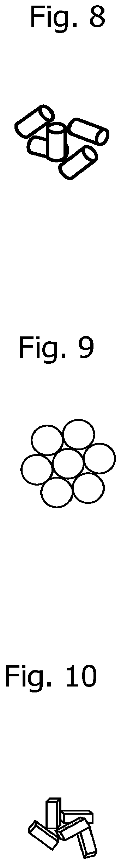

Fig. 8 shows a detail of a first variant of magnetizable bodies. The magnetizable bodies can in particular be used for any of the embodiments. The magnetizable bodies according to Fig. 8 are configured as cylindrical bodies. The cylindrical bodies can comprise cylinders of different length or diameter. The cylindrical bodies can in particular consist of cylinders of the same size and diameter. The magnetizable bodies can have a volume of at least 0.001 mm³ and at most 2 cm³. The magnetizable bodies have a length dimension, which ranges from at least 0.2 mm up to and including 2 cm.

Fig. 9 shows a detail of a second variant of magnetizable bodies. The magnetizable bodies can be used for any of the embodiments. The magnetizable bodies are configured as spherical bodies. The spherical bodies can comprise spheres of different length or diameter. The spherical bodies can in particular consist of spheres of the same diameter. The magnetizable bodies can have a volume of at least 0.001 mm³ and at most 2 cm³. The magnetizable bodies have a diameter, which ranges from at least 0.2 mm up to and including 2 cm.

Fig. 10 shows a detail of a third variant of magnetizable bodies. The magnetizable bodies can be used for any of the embodiments. The magnetizable bodies are configured as cuboid bodies. The cuboid bodies can comprise cuboids of different length, width or height. The cuboid bodies can in particular consist of cuboids of the same length. The cuboid bodies can in particular consist of cuboids of the same width. The cuboid bodies can in particular consist of cuboids of the same height. The magnetizable bodies can have a volume of at least 0.001 mm³ and at most 2 cm³. The magnetizable bodies have a length, which ranges from at least 0.2 mm up to and including 2 cm. The magnetizable bodies have a width, which ranges from at least 0.2 mm up to and including 2 cm. The magnetizable bodies have a height, which ranges from at least 0.2 mm up to and including 2 cm.

The magnetizable bodies in the container can comprise any combination of the variants as exemplified in Fig. 8, Fig. 9 and Fig. 10.

It should be apparent to those skilled in the art that many more modifications besides those already described are possible without departing from the inventive concepts herein. The inventive subject matter, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of an element or compound selected from the group consisting of A, B, C .... and N, the text should be interpreted as requiring only one element from the group, not A plus N, or B plus N, etc.

## Claims

1. A method for polishing a solid article (10) obtained by an additive manufacturing device, wherein the solid article (10) is placed in a container (105, 125, 145, 165, 185, 205) containing a plurality of magnetizable bodies (103, 123, 143, 163, 183, 203), wherein a magnet (109, 129, 149, 169, 179, 189, 199, 209, 219) is provided for magnetizing the magnetizable bodies (103, 123, 143, 163, 183, 203) **characterized in that** the magnetizable bodies (103, 123, 143, 163, 183, 203) are moved within the container (105, 125, 145, 165, 185, 205) if one of the magnet (109, 129, 149, 169, 179, 189, 199, 209, 219) or the container (105, 125, 145, 165, 185, 205) is moved.

2. The method of claim 1, wherein the container (105, 125, 145, 165, 185, 205) is rotated or oscillated or pivoted.

3. The method of one of the preceding claims, wherein the magnet (109, 129, 149, 169, 179, 189, 199, 209, 219) performs a rotary, pivoting or oscillating movement.

4. The method of one of the preceding claims, magnetizable bodies (103, 123, 143, 163, 183, 203) have a volume of at least 0.001 mm³ and at most 2 cm³ or wherein the magnetizable bodies (103, 123, 143, 163, 183, 203) have a length dimension, which ranges from at least 0.1 mm up to and including 2 cm.

5. The method of one of the preceding claims, wherein the solid article (10) is immerged in the magnetizable bodies (103, 123, 143, 163, 183, 203) for a duration of at least 1 minute up to and including 500 minutes.

6. The method of one of the preceding claims, wherein the mean surface roughness according to ISO 4287 is at most 0.1 mm after the extraction of the solid article (10) from the container containing the magnetizable bodies (103, 123, 143, 163, 183, 203).

7. A polishing device (100, 120, 140, 160, 180, 200) for polishing a solid article (10) obtained by an additive manufacturing device comprising a container (105, 125, 145, 165, 185, 205) containing a plurality of magnetizable bodies (103, 123, 143, 163, 183, 203) for receiving the solid article, a magnet (109, 129, 149, 169, 179, 189, 199, 209, 219) for magnetizing the magnetizable bodies (103, 123, 143, 163, 183, 203) **characterized in that** the magnetizable bodies (103, 123, 143, 163, 183, 203) are movable within the container (105, 125, 145, 165, 185, 205) if one of the magnet (109, 129, 149, 169, 179, 189, 199, 209, 219) or the container (105, 125, 145, 165, 185, 205) is moved.

8. The polishing device (100, 120, 140, 160, 180, 200) of claim 7, wherein one of the container (105, 125, 145, 165, 185, 205) or the magnet (109, 129, 149, 169, 179, 189, 199, 209, 219) is rotatable or subjectable to an oscillating or pivoting movement.

9. The polishing device (100, 120, 140, 160, 180, 200) of one of claims 7 to 8, wherein the magnet (109, 129, 149, 169, 179, 189, 199, 209, 219) is placed outside of the container (105, 125, 145, 165, 185, 205).

10. The polishing device (100, 120, 140, 160, 180, 200) of one of claims 7 to 9, wherein the magnetizable bodies (103, 123, 143, 163, 183, 203) comprise at least one element selected from the group of spherical bodies, cuboid bodies or cylindrical bodies.

11. The polishing device (100, 120, 140, 160, 180, 200) of one of claims 7 to 10, wherein the magnetizable bodies (103, 123, 143, 163, 183, 203) have a volume of at least 0.001 mm³ and at most 2 cm³ or wherein the magnetizable bodies (103, 123, 143, 163, 183, 203) have a length dimension, which ranges from at least 0.1 mm up to and including 2 cm.

12. The polishing device (100, 120, 140, 160, 180, 200) of one of claims 7 to 11, wherein the solid article (10) is immerged in the magnetizable bodies (103, 123, 143, 163, 183, 203) for a duration of at least 1 minute up to and including 500 minutes.

13. The polishing device (100, 120, 140, 160, 180, 200) of one of claims 7 to 12, wherein the magnetizable bodies (103, 123, 143, 163, 183, 203) are at least partially immerged in a fluid.

14. The polishing device (100, 120, 140, 160, 180, 200) of one of claims 7 to 13, wherein the magnetizable bodies (103, 123, 143, 163, 183, 203) contain iron, e.g. stainless steel.

15. Use of a polishing device (100, 120, 140, 160, 180, 200) of one of claims 7 to 14 for polishing a solid article (10) obtained by an additive manufacturing device.
